Europäisches Patentamt

European Patent Office

Office européen des brevets

(19)

(11) Numéro de publication: **0 278 819**
**B1**

(12) **FASCICULE DE BREVET EUROPEEN**

(45) Date de publication du fascicule du brevet:
13.12.89

(51) Int. Cl.⁴: **B60S 1/38**

(21) Numéro de dépôt: 88400123.1

(22) Date de dépôt: 21.01.88

(54) Balai d'essuie-glace pour véhicule automobile adapté pour essuyer une surface convexe.

(30) Priorité: 27.01.87 FR 8700909

(43) Date de publication de la demande:
17.08.88 Bulletin 88/33

(45) Mention de la délivrance du brevet:
13.12.89 Bulletin 89/50

(84) Etats contractants désignés:
DE ES FR GB IT

(56) Documents cités:
DE-A- 2 638 010
FR-A- 2 321 409
GB-A- 887 630
US-A- 4 438 543

(73) Titulaire: VALEO SYSTEMES D'ESSUYAGE,
21-27 Boulevard Gambetta,
F-92130 Issy-les-Moulineaux(FR)

(72) Inventeur: Raymond, Bernard, 23, rue Cavendish,
F-75019 Paris(FR)

(74) Mandataire: Gamonal, Didier, Société VALEO Service
Propriété Industrielle 30, rue Blanqui, F-93406 Saint
Ouen(FR)

ACTORUM AG

## Description

La présente invention se rapporte à un balai d'essuie-glace destiné à équiper un véhicule automobile, ce balai étant particulièrement adapté pour essuyer une surface convexe.

Pour que les conducteurs d'automobiles puissent bénéficier d'un très large champ de vision avant, on élargit les pare-brise dans toute la mesure du possible. On obtient cet élargissement en déplaçant vers l'arrière les montants latéraux du pare-brise, de telle sorte que celui-ci présente une forme très bombée sur les côtés du véhicule.

Ces pare-brise, dits panoramiques, ont donc un rayon de courbure très variable suivant que l'on considère le centre du pare-brise ou son extrémité latérale. Il en résulte que, d'une manière générale, les essuie-glaces qui balaient un pare-brise panoramique ne peuvent épouser constamment la courbure très variable du pare-brise : le balayage, s'il est correct au centre de ce dernier, est pratiquement inexistant sur les côtés, ce qui, par temps de pluie, annule l'augmentation de visibilité que l'on attend de la forme panoramique du pare-brise.

De nombreux dispositifs ont été proposés pour résoudre ce problème.

Entre autres, on peut mentionner le dispositif conforme au brevet français FR-A 1 406 560, suivant lequel le balai d'essuie-glace comporte, sur au moins l'une de ses extrémités, un organe formé de deux bras oscillants articulés sur un même axe, sensiblement symétrique l'un de l'autre par rapport à cet axe et sollicités l'un vers l'autre par un ressort, ledit axe portant également un palonnier classique en une seule pièce placé entre les deux bras. Ces derniers s'écartent ou se rapprochent l'un de l'autre sous l'effet du ressort suivant que l'essuie-glace s'appuie sur une partie du pare-brise respectivement à faible ou à forte courbure, la raclette prenant, dans le premier cas, une position sensiblement rectiligne, et, dans le second cas, une forme très curviligne du côté de l'extrémité munie de l'axe précité.

Cette solution ne fait que suivre la courbure du pare-brise avec diminution de la force d'application pour la partie à forte courbure.

La présente invention a pour but de proposer une nouvelle solution pour faire suivre à la raclette d'un essuie-glace la surface à essuyer quand cette surface devient convexe, ce qui est notamment le cas de l'essuyage des parties latérales d'un pare-brise, cette solution offrant l'avantage complémentaire par rapport à celles qui ont été proposées jusqu'ici, d'assurer une action d'assuyage d'autant plus forte que la surface est plus convexe.

La présente invention a donc pour objet un balai d'essuie-glace comprenant une armature destinée à être articulée sur l'extrémité d'un bras d'essuie-glace et comportant, à chacune de ses extrémités, au moins un palonnier articulé, lesdits palonniers permettant de supportés une raclette propre à frotter contre une surface à essuyer, caractérisé en ce qu'il comporte un levier auxiliaire articulé sur la partie de l'armature qui prolonge le bras et dont les extrémités prennent appui sur le dos de la raclette, respectivement sur la zone médiane et sur l'extrémité libre correspondante de la raclette.

Pour mieux faire comprendre l'objet de la présente invention, on va en décrire maintenant, à titre d'exemple purement illustratif et non limitatif, un mode de réalisation représenté sur le dessin annexé.

sur ce dessin :

- La figure 1 est une vue en élévation d'un balai d'essuie-glace muni de son bras de commande, en position de repos.

- La figure 2 est une vue de dessus du balai d'essuie-glace de la figure 1, le bras de commande ayant été omis dans un souci de simplification du dessin.

- La figure 3 est une vue en élévation du balai d'essuie-glace de la figure 1, en position de travail sur la surface d'un pare-brise.

- La figure 4 est une vue en perspective avec parties arrachées de la région du balai d'essuie-glace dans laquelle est située le levier destiné à faire suivre à la raclette les surfaces convexes à essuyer.

- La figure 5 est une vue en perspective à grande échelle du détail A de la figure 1.

- Les figures 6 et 7 sont des vues en perspective à grande échelle du détail B de la figure 1.

- La figure 8 est une vue en perpective à grande échelle du détail C de la figure 4.

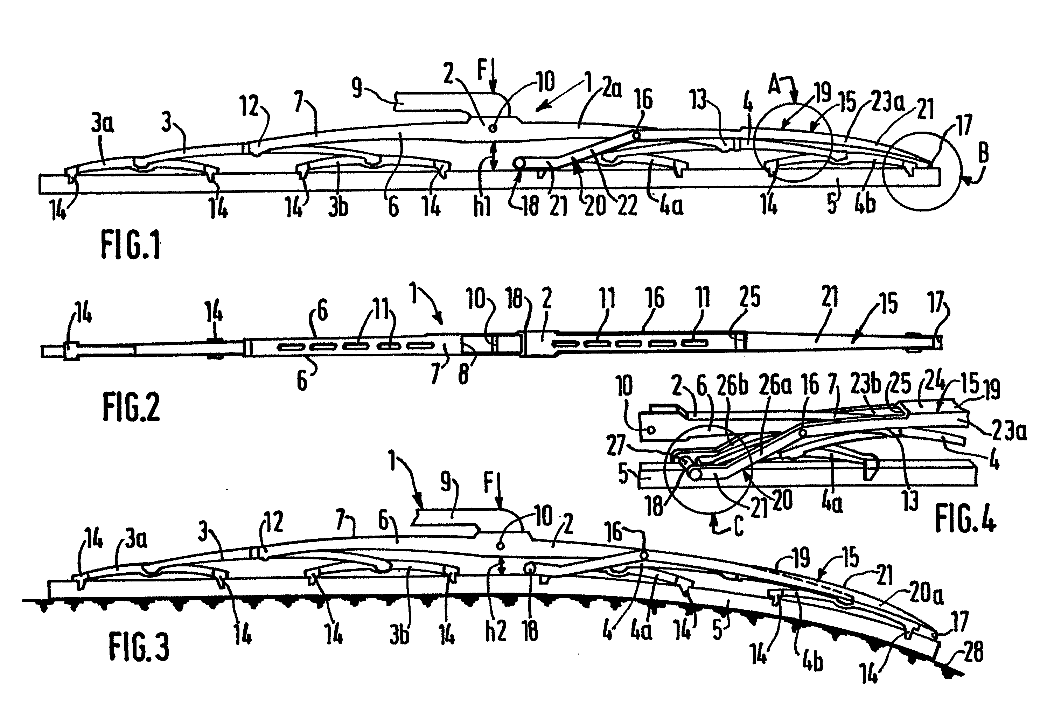

Si l'on se réfère maintenant à la figure 1, on voit que l'on a désigné par 1, dans son ensemble, un balai d'essuie-glace constitué par une armature 2 qui porte deux palonniers principaux 3, 4, portant, à leur tour, chacun deux palonniers secondaires respectivement 3a, 3b et 4a, 4b, dont les extrémités portent une lame de rigidification et de maintien (non représentée) constituant le dos d'une raclette 5.

L'armature 2, de forme allongée, est une armature en U, comportant deux ailes 6 raccordées à un fond 7. Dans la région médiane de l'armature 2, l'âme 7 s'élargit et présente, dans cette partie élargie, une ouverture 8 (figure 2), dont la largeur est pratiquement égale à celle dudit fond 7. Les ailes 6 se prolongent vers le haut dans leur partie située en regard de ladite ouverture 8; de façon à constituer, dans cette région médiane de l'armature, une chappe d'accouplement du bras de commande 9 du balai d'essuie-glace 1. A cet effet, les ailes 6 sont reliées, dans la région précitée, par un axe 10, qui leur est perpendiculaire et qui constitue l'axe d'articulation du bras de commande 9.

Chaque extrémité de l'armature 2 comporte un axe d'articulation, respectivement 12 et 13 autour duquel peut osciller un palonnier principal, respectivement 3 ou 4. De la même façon, chaque extrémité d'un palonnier principal 3 ou 4 comporte un axe d'articulation autour duquel peuvent osciller les palonniers secondaires, respectivement 3a, 3b et 4a, 4b.

Les axes d'articulation des palonniers secondaires précités n'ont pas été référencés dans un souci de simplification du dessin, dans la mesure où un tel montage est tout à fait classique.

Par ailleurs, les extrémités libres 14 des palonniers secondaires 3a, 3b, 4a 4b sont conformés en étriers de maintien de la raclette 5.

Le balai d'essuie-glace 1 comporte également un levier 15 disposé dans la région dudit balai 1 située à l'opposé de l'arbre d'entraînement (non représenté) du bras de commande 9.

Ce levier 15 s'articule autour d'un axe 16 situé sensiblement à mi-longueur de la partie 2a de l'armature 2 entre les axes 10 et 13.

Le levier 15 consiste en un organe allongé, de forme générale cintrée, prenant appui, par ses deux extrémités libres, sur le dos de la raclette 5, d'une part, en 17 à l'extrémité de celle-ci opposé à l'arbre d'entraînement (non représenté) du bras 9, et, d'autre part, en 18 au voisinage de la région située au droit de l'axe 10, mais toujours dans la même moitié de la raclette 5.

Le levier 15 comporte deux parties de longueurs différentes, à savoir une partie 19 située entre l'axe d'articulation 16 et le point d'appui 17 représentant une forme générale arquée, de concavité tournée vers l'extrémité 5a de la raclette 5, et une autre partie 20 située entre ledit axe 16 et le point d'appui 18 présentant une forme générale coudée. Cette partie 20 comporte une première branche 21, courte, sensiblement parallèle à la raclette 5 et s'étendant à partir du point d'appui 18, et une autre branche 22 oblique reliant l'extrémité de la précédente à la partie 19.

Cette partie 19 du levier 15 s'étend au dessus de l'extrémité correspondante de la partie 2a de l'armature 2 et des branches dirigées vers l'extérieur du palonnier principal 4 et du palonnier secondaire 4b. Elle présente une section en U, dont les ailes 23a, 23b viennent, en position de montage, se situer de part et d'autre des ailes 6 de la partie 2a de l'armature 2, l'âme 24 étant disposée au-dessus de l'âme 7 de l'armature 2 et des branches extérieures des palonniers 4 et 4a.

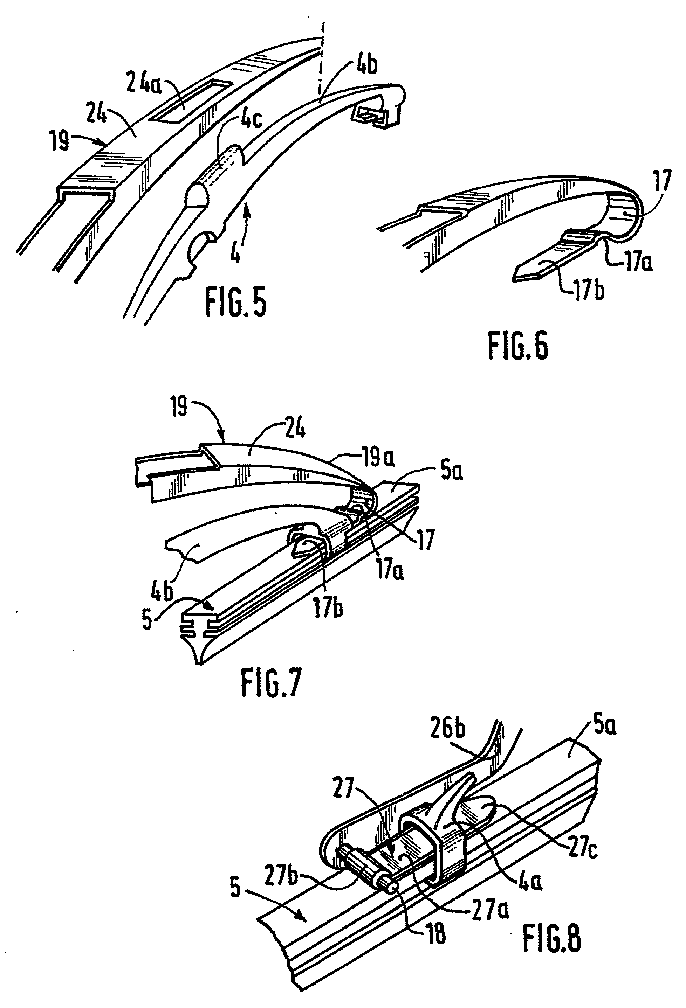

Dans cette même partie 19, l'âme 24 possède une lumière 24a située au delà de l'axe d'articulation du palonnier primaire 4 vers la partie extrême du balai 5, cette lumière 24a coopère avec un bossage dorsal 4c du palonnier primaire 4 et permet un maintien radial du levier 15 lorsque celui-ci est en appui sur le balai 5, ledit balai 5 essuyant une surface fortement convexe et ce palonnier primaire 4 faisant partie intégrante de la partie 2a de l'armature 2 et des paliers secondaires 4a et 4b est plus rigide radialement que l'extrémité du levier 15 (figure 5).

La hauteur des ailes 23a et 23b s'amenuise au fur et à mesure que l'on s'approche de l'extrémité libre de la partie 19 du levier 15, ladite partie 19 se terminant suivant une lame recourbée sur elle-même formant le point d'appui 17.

Cette lame recourbée a un prolongement 17a et 17b venant de matière avec le levier 15, ce prolongement est en appui sur le dos du balai 5 et l'extrémité 17b coulisse sous l'étrier de maintien du palonnier secondaire 4b, le bourrelet 17a sert de butée à la pénétration de l'extrémité 17b sous les étriers de maintien, cette réalisation empêche que l'extrémité 21 du levier 15 puisse s'échapper latéralement, dans l'action d'essuyage du dos du balai 5 (figure 6-7).

Au voisinage de l'axe 16, l'âme 24 comporte une échancrure 25 (figure 4), de telle sorte que dans cette zone, le levier 15 se limite aux deux régions en regard des ailes latérales 23a, 23b. Ces ailes se prolongent en 26a, 26b au delà de l'axe 16, en oblique puis sensiblement parallèlement à la raclette 5, pour être réunis, à leurs extrémités libres, par un axe transversal 18 et une languette 27a formant la butée 27, qui vient en appui sur le dos de la raclette 5 en position de repos du levier 15, les prolongements 26a, 26b des ailes forment, avec la butée 27, la partie 20 précitée du levier 15.

La butée 27 comporte une languette 27a qui a une extrémité 27b enroulée sur un axe 18 pivotante sur ledit axe 18, l'autre extrémité 27c de la languette 27a coulisse sous les étriers de maintien du palonnier secondaire 4a

Cette réalisation empêche que la butée 27 puisse s'échapper latéralement, dans l'action d'essuyage, du dos de la raclette 5 (figure 8).

Ceci étant, le fonctionnement d'un balai d'essuie-glace conforme à l'invention est le suivant.

Lorsque le balai d'essuie-glace est au repos ou en position d'essuyage d'une surface plane (figure 1), le levier 15 repose sur le dos de la raclette 5, en 18 par la butée 27 et en 17 par l'extrémité de la partie 19.

Le bras 9, sous l'effet de moyens de rappel élastiques (non montrés) exerce une force F, sur l'axe 10, tendant à appliquer la raclette 5 contre la surface à essuyer.

Lorsque la raclette 5 est appuyée, par la force F, contre une zone de surface convexe 28 (figure 3) d'un pare-brise, la distance à 2 entre l'armature 2 et la raclette 5, au droit du point d'application de la force F, a tendance à diminuer par rapport à la distance $h1$ (figure 1) existant dans le cas d'une surface plane ($h2 < h1$), il en résulte que le levier 15 va basculer, autour de l'axe 16, dans le sens horaire selon la représentation des figures 1 et 3. L'extrémité du levier 15 va appuyer davantage contre l'extrémité de la raclette 5 qui est ainsi contrainte à épouser la surface convexe 28 du pare-brise.

Il est à noter que plus la convexité de la surface 28 est grande, plus la force d'appui de la partie 19 du levier 15 en 17 est grande contre la raclette 5, le suivi de la surface courbe est donc obtenu dans de bonnes conditions.

Il est bien entendu que le mode de réalisation ci-dessus décrit n'est aucunement limitatif et pourra donner lieu à toutes modification désirable, sans sortir pour cela du cadre de l'invention, comme par exemple, le levier auxiliaire peut s'articuler sur l'autre demi-armature ou bien un deuxième levier auxiliaire peut completer le premier.

**Revendications**

1) Balai d'essuie-glace comprenant une armature (2) destinée à être articulée sur l'extrémité d'un bras (9) d'essuie-glace et comportant, à chacune de ses extrémités, au moins un palonnier articulé (3, 4), lesdits palonniers (3, 4) permettant de supporter une raclette (5) propre à frotter contre une surface à essuyer, caractérisé en ce qu'il comporte un levier auxiliaire (15) articulé sur la partie (2a) de l'armature (2) qui prolonge le bras (9) et dont les extrémités prennent appui sur le dos de la raclette (5), respectivement sur la zone médiane et sur l'extrémité (5a) libre correspondante de la raclette.

2) Balai d'essuie-glace selon la revendication 1, caractérisé en ce que le levier (15) s'articule autour d'un axe (16) situé sensiblement à mi-longueur de la partie (2a) de l'armature (2) .

3) Balai d'essuie-glace selon les revendications 1 et 2, caractérisé en ce que les parties (19, 20) du levier (15) situées de part et d'autre de l'axe (16) d'articulation ont des longueurs différentes

4) Balai d'essuie-glace selon la revendication 3 caractérisé en ce que la partie (19) du levier (15) située entre l'axe d'articulation (16) et l'extrémité (5a) de la raclette (5) se situe au dessus de la partie (2a) de l'armature (2) et du (ou des) palonnier (s) (4, 4a, 4b) articulé(s) sur l'armature (2).

5) Balai d'essuie-glace selon la revendication 4, caractérisé en ce que la partie (19) du levier (15) est ouverte d'une lumière (24a) dans laquelle un bossage dorsal (4c) ménagé sur un palonnier secondaire (4b) dans une zône différente de la zone d'articulation dudit palonnier, est susceptible de pénétrer.

6) Balai d'essuie-glace selon les revendications 1 et 4 caractérisé en ce que le levier (15) est consitiué par un organe en U qui comporte une partie (19) dont l'âme (24) présente, à l'une des extrémités une échancrure (25) pour le passage de l'armature (2) les ailes (23a, 23b) dudit organe en U se prolongeant pour être remises à leurs extrémités par une butée (27) susceptible de venir en appui sur la raclette (5), dans sa zone médiane.

7) Balai d'essuie-glace selon la revendication 6, caractérisé en ce que la partie (19) présente une forme cintrée (19a) de concavité tournée vers la raclette (5).

8) Balai d'essuie-glace selon la revendication 7, caractérisé en ce que l'extrémité cintrée (19a) présente une forme recourbée sur elle-même avec un prolongement (17b) qui coulisse sous les étriers de maintien du pilonnier secondaire (4b) et possède un arrêt de coulissement constitué par un bourrelet (17a).

9) Balai d'essuie-glace selon la revendications 6 caractérisé en ce que la butée (27), disposée a l'extrémité du levier (15) prend appui sur la raclette (5) et est consituée d'une languette (27a) dont une extrémité (27b) est enroulée sur l'axe (18) tandis que l'autre extrémité (27c) coulisse sous les étriers de maintien du palonnier secondaire (4a).

10) Balai d'essuie-glace selon les revendications 1, 3, 7 et 8 caractérisé en ce que le levier (15) est en appui élastique sur l'extrémité (5a) de la raclette (5).

**Patentansprüche**

1. Scheibenwischerblatt mit einem Bügel (2), der für die gelenkige Anbringung am Ende eines Wischarms (9) bestimmt ist und an jedem der Enden wenigstens eine gelenkig angebrachte Traverse (3, 4) aufweit, wobei die genannten Traversen (3, 4) die Anbringung eines Wischblattes (5) zum Wischen einer entsprechenden Fläche erlauben, dadurch gekennzeichnet, daß es einen Hilfshebel (15) aufweist, der gelenkig am Teil (2a) des Bügels (2) angebracht ist, der den Arm (9) fortsetzt und dessen Enden auf der Rückseite des Wischblatts (5), jeweils auf dem mittleren Teil und auf dem entsprechenden freien Ende (5a) des Wischblatts, aufliegen.

2. Scheibenwischerblatt nach Anspruch 1, dadurch gekennzeichnet, daß der Hebel (15) um eine Achse (16) drehbar ist, die im wesentlichen auf halber Länge des Teils (2a) des Bügels (2) angeordnet ist.

3. Scheibenwischerblatt nach Anspruch 1 und 2, dadurch gekennzeichnet, daß die Teile (19, 20) des Hebels (15), die beiderseits der Drehachse (16) angeordnet sind, unterschiedliche Längen aufweisen.

4. Scheibenwischerblatt nach Anspruch 3, dadurch gekennzeichnet, daß der Teil (19) des Hebels (15), der zwischen der Drehachse (16) und dem Ende (5a) des Wischblatts (5) liegt, oberhalb des Teils (2a) des Bügels (2) und der Traverse(n) (4, 4a, 4b), die am Bügel (2) drehbar angebracht ist (sind), angeordnet ist.

5. Scheibenwischerblatt nach Anspruch 4, dadurch gekennzeichnet, daß der Teil (19) des Hebels (15) eine Öffnung (24a) aufweist, in die ein Vorsprung (4c) eingreifen kann, der am Rücken einer Hilfstraverse (4b) in einem Bereich vorgesehen ist, der sich vom Drehbereich der genannten Traverse unterscheidet.

6. Scheibenwischerblatt nach den Ansprüchen 1 und 4, dadurch gekennzeichnet, daß der Hebel (15) aus einem U-förmigen Organ besteht, welches einen Teil (19) aufweist, dessen Steg (24) an einem Ende eine Aussparung (25) zur Durchführung des Bügels (2) besitzt, wobei die Flügel (23a, 23b) des genannten U-förmigen Organs sich fortsetzen und am Ende an einen Anschlag (27) angrenzen, der auf dem Wischblatt (5) im mittleren Bereich aufliegen kann.

7. Scheibenwischerblatt nach Anspruch 6, dadurch gekennzeichnet, daß der Teil (19) eine gebogene Form (19a) aufweist, deren konkave Fläche dem Wischblatt (5) zugewandt ist.

8. Scheibenwischerblatt nach Anspruch 7, dadurch gekennzeichnet, daß das gebogene Ende (19a) eine um sich selbst gekrümmte Form mit einer Verlängerung (17b) aufweist, die unter die Haltebügel der Hilfstraverse (4b) gleitet und in der Gleitbewegung durch einen Wulst (17a) arretiert wird.

9. Scheibenwischerblatt nach Anspruch 6, dadurch gekennzeichnet, daß der am Ende des Hebels (15) angeordnete Anschlag (27) auf dem Wischblatt (5) aufliegt und aus einer Zunge (27a) besteht, deren eines Ende (27b) um die Achse (18) gewickelt ist, während das andere Ende (27c) unter die Haltebügel der Hilfstraverse (4a) gleitet.

10. Scheibenwischerblatt nach Anspruch 1, 3, 7 und 8, dadurch gekennzeichnet, daß der Hebel (15) elastisch auf dem Ende (5a) des Wischblatts (5) aufliegt.

**Claims**

1. A windscreen wiper comprising an armature (2) adapted to be pivotally attached to the end of a windscreen wiper arm (9) and including, at each of its ends, at least one pivoted yoke member (3, 4), the said yoke members (3, 4) allowing a wiper blade (5), for engaging against a surface to be swept, to be supported, characterised in that the windscreen wiper includes an auxiliary lever (15) pivoted on the portion (2a) of the armature (2) which forms an extension of the wiper arm (9), and the ends of which bear on the back of the wiper blade (5), on the central part and the corresponding free end (5a) of the wiper blade respectively.

2. A windscreen wiper according to Claim 1, characterised in that the lever (15) is pivoted about an axis (16) which is situated substantially half way along the length of the said portion (2a) of the armature (2).

3. A windscreen wiper according to Claims 1 and 2, characterised in that the portions (19, 20) of the lever (15) which extend to either side of the pivot axis (16) are of different lengths.

4. A windscreen wiper according to Claim 3, characterised in that the portion (19) of the lever (15) which lies between the axis (16) and the said end (5a) of the wiper blade (5) lies above the said portion (2a) of the armature (2) and above the yoke member of members (4, 4a, 4b) pivoted to the armature (2).

5. A windscreen wiper according to Claim 4, characterised in that the said portion (19) of the lever (15) has a through opening (24a) in whcih a projection (4c), formed on the back of a secondary yoke member (4b) in a different region of the said yoke member from the region in which it is pivoted, is arranged to engage.

6. A windscreen wiper according to Claims 1 and 4, characterised in that the lever (15) is in the form of a U-shaped member having one portion (19) in which the transverse web portion (24) has a slot (25) at one of its ends to accommodate the armature (2), the said U-shaped member comprising wing portions (23a, 23b), which are extended so as to be provided at their free ends with a blade engaging means adapted to bear on the wiper blade (5) in its said central part.

7. A windscreen wiper according to Claim 6, characterised in that the said portion (19) is of an arched shape (19a) which is concave towards the wiper blade (5).

8. A windscreen wiper according to Claim 7, characterised in that the arched end portion (19a) is turned back on itself, with an extension portion (17b) which slides under the retaining stirrups of the secondary yoke member (4b) and which has stop means for sliding movement, the stop means comprising a ridge (17a).

9. A windscreen wiper according to Claim 6, characterised in that the wiper engaging means (27), which is disposed at the end of the lever (15), bears on the wiper blade (5) and comprises a tongue (27a), one end (27b) of which is wrapped around the axis (18), while the other end (27c) slides under the support stirrups of the secondary yoke member (4a).

10. A windscreen wiper according to Claims 1, 3, 7 and 8, characterised in that the lever (15) is in resilient engagement on the end (5a) of the wiper blade (5).

FIG.1

FIG.2

FIG.3

FIG.4

FIG.5

FIG.6

FIG.7

FIG.8